# EUROPÄISCHE PATENTSCHRIFT

(11) **EP 1 774 217 B1**
(45) Veröffentlichungstag und Bekanntmachung des Hinweises auf die Patenterteilung: **01.04.2009**
(21) Anmeldenummer: 05762767.1
(22) Anmeldetag: 19.07.2005
(51) Int. Cl.: F16L 21/035, F16L 21/02, F02M 55/00, F02M 55/02

(54) **VERBINDUNG VON LEITUNGEN FÜR HOCHDRUCKMEDIEN**
CONNECTION FOR HIGH-PRESSURE MEDIA CONDUITS
RACCORD DE CONDUITES POUR MILIEUX SOUS HAUTE PRESSION

(30) Priorität: 28.07.2004 AT 12922004
(43) Veröffentlichungstag der Anmeldung: 18.04.2007
(73) Patentinhaber: ROBERT BOSCH GMBH, 70469 Stuttgart-Feuerbach (DE)
(72) Erfinder: HLOUSEK, Jaroslaw, A-5440 Golling (AT); LEIFERT, Volker, 70499 Stuttgart (DE); SCHWAIGHOFER, Herbert, A-4893 Zell am Moos (AT); GUGGENBICHLER, Franz, A-5431 Kuchl (AT)
(74) Vertreter: Haffner, Thomas M.
(86) Internationale Anmeldenummer: PCT/AT2005/000285
(87) Internationale Veröffentlichungsnummer: WO 2006/010182

(56) Entgegenhaltungen:
- US-A- 3 656 771
- US-B1- 6 374 806
- US-B1- 6 418 911
- PATENT ABSTRACTS OF JAPAN Bd. 2000, Nr. 20, 10. Juli 2001 (2001-07-10) & JP 2001 059464 A (OTICS CORP), 6. März 2001 (2001-03-06)
- PATENT ABSTRACTS OF JAPAN Bd. 2003, Nr. 12, 5. Dezember 2003 (2003-12-05) & JP 2004 108269 A (DENSO CORP), 8. April 2004 (2004-04-08)

## Beschreibung

Die Erfindung betrifft eine Verbindung von Leitungen für Hochdruckmedien, bei welcher eine erste Leitung ein in das Innere einer zweiten Leitung eingeschobenes Anschlussstück aufweist, wobei das Anschlussstück und die zweite Leitung entweder unmittelbar oder unter Zwischenschaltung einer Dichtung miteinander zusammenwirkende zylindrische Dichtflächen tragen.

Eine derartige Leitungsverbindung wird beispielsweise benötigt, um die einzelnen Komponenten von Kraftstoffeinspritzsystemen von Brennkraftmaschinen, insbesondere Dieseleinspritzsystemen, wie beispielsweise Commonraileinspritzsystemen von Dieselmotoren miteinander zu verbinden. Commonraileinspritzsysteme finden in Kraftfahrzeugen sowie auch in den Großdieselapplikationen für Stationärmotoren, Bau- und Landmaschinen, Lokomotiven und Schiffen Verwendung. Dabei werden Hochdruckleitungen, welche der Zuführung des Kraftstoffes dienten, mit anderen Komponenten des Einspritzsystems, wie beispielsweise dem Injektor einer Commonraileinspritzanlage, dichtend verbunden, wobei mit Rücksicht auf die in derartigen Systemen herrschenden hohen Drucke die Leitungen und insbesondere die Anschluss- und Verbindungsstellen entsprechend ausgelegt werden müssen. Zur ausreichenden Abrichtung von Anschlussteilen mit ebenen Anschlussflächen sind erhebliche Anpresskräfte erforderlich, die einen Anpressdruck bis zum Dreifachen des abzudichtenden Innendruckes aufbringen müssen. Dies bedingt einen großen konstruktiven Aufwand, verbunden mit erheblichem Raumbedarf und hohen Kosten. Bei zylindrischen Dichtflächen muss neben dem Aufbringen der axialen Anpresskräfte auch darauf geachtet werden, dass die miteinander zusammenwirkenden Dichtflächen des Anschlussstücks der einen Leitung und der zweiten Leitung, in welche das Anschlussstück eingeschoben ist, mit ausreichender Kraft in radialer Richtung aneinander gepresst werden, sodass das Austreten von Flüssigkeiten und insbesondere von Kraftstoffen in die Umgebung verhindert wird.

JP 2001 059 464 offenbart eine Verbindung für Leitungen von Hochdruckmedien, mit geringer Wandstärke.

Die vorliegende Erfindung zielt nun darauf ab eine Leitungsverbindung zu schaffen, bei der eine ausreichende Dichtkraft in radialer Richtung zwischen einem Anschlussstück einer ersten Leitung und einer zweiten Leitung, in welche das Anschlussstück eingeschoben ist, aufzubringen, wobei die Dichtheit der Leitungsverbindung mit Rücksicht auf die bei Dieseleinspritzsystemen vorherrschenden Drucke auch bei Innendrücken von 2000 bar und mehr gewährleistet sein soll. Der konstruktive Aufwand sowie der Raumbedarf für die Leitungsverbindung darf jedoch die üblichen Standards nicht überschreiten, wobei auch die Kosten in vertretbaren Grenzen gehalten werden sollen. Die Leitungsverbindung soll auch derart gestaltet werden, dass sie den stark wechselnden Innendrücken angepasst ist.

Zur Lösung dieser Aufgabe besteht die Erfindung im Wesentlichen darin, dass das Anschlussstück im Bereich wenigstens eines Teils seiner Dichtfläche mit verringerter Wandstärke ausgebildet ist, welche weniger als 50 % der Wandstärke der zweiten Leitung im Bereich ihrer Dichtfläche beträgt. Dadurch, dass im Bereich der miteinander zusammenwirkenden Dichtflächen die Wandstärke des inneren Teils, d.h. die Wandstärke des in die zweite Leitung eingeschobenen Anschlussstücks im Wesentlichen geringer ist, als die Wandstärke des äußeren Teils, d.h. der zweiten Leitung, gelingt es den in den Leitungen herrschenden Innendruck zur Aufrechterhaltung der Dichtheit zu nutzen. Aufgrund der geringeren Wandstärke dehnt sich der innere Teil infolge des Innendruckes stärker aus als der äußere Teils sodass eine Anpressung des inneren Teils an den äußeren Teil erfolgt. Die dabei auftretende Anpresskraft ist direkt abhängig vom vorliegenden Innendruck, sodass sich selbsttätig die jeweils erforderliche Anpresskraft einstellt. Grundsätzlich wurde festgestellt, dass eine Wandstärke des inneren Teiles, welche weniger als 50 % der Wandstärke des äußeren Teiles aufweist, ausreicht, um auch bei weniger elastischen Materialien eine ausreichende Dichtheit zu erreichen. Bevorzugte Ausführungsformen ergeben sich jedoch bei kleineren Wandstärken für das innere Anschlussstück, wobei naturgemäß die Stabilität des Teiles bei zu dünnen Wandstärken nicht gefährdet werden soll. Bevorzugt ist daher vorgesehen die Wandstärke des Anschlussstücks im Bereich wenigstens eines Teiles seiner Dichtfläche kleiner als 40 %, kleiner als 30 %, kleiner als 20 %, kleiner als 15 %, kleiner als 10 % oder kleiner als 5 % der Wandstärke der zweiten Leitung im Bereich ihrer Dichtfläche zu wählen.

Mit Vorteil ist die Ausbildung derart weitergebildet, dass die Dichtfläche des Anschlussstücks an einem hohlzylindrischen Ansatz des Anschlussstücks ausgebildet ist, wobei der hohlzylindrische Ansatz bevorzugt einen Innendurchmesser von 70 % bis 95 %, vorzugsweise 85 % bis 90 %, des Innendurchmessers der zweiten Leitung aufweist und sich vorzugsweise über eine axiale Länge von mindestens 1/3, vorzugsweise 1/3 bis 2/3, des Innendurchmessers der zweiten Leitung erstreckt. Derartige Dimensionierungen ergeben insbesondere dann eine optimale Abdichtung, wenn es sich um ein Dieseleinspritzsystem handelt, bei welchem, wie es einer bevorzugten Ausbildung entspricht, die erste Leitung eine Hochdruckzuführungsleitung für Kraftstoff und die zweite Leitung als Speicherraum eines Injektors eines Kraftstoffeinspritzsystems für Verbrennungsmotoren, insbesondere Dieselmotoren, ausgebildet ist.

Eine verbesserte Abdichtung, ohne die Stabilität des hohlzylindrischen Ansatzes zu gefährden, ergibt sich gemäß einer bevorzugten Ausbildung dadurch, dass die Innenwand des hohlzylindrischen Ansatzes an dessen freiem Ende eine kegelförmige Freistellung aufweist, wobei bevorzugt die kegelförmige Freistellung mit einem Kegelwinkel von 10 bis 60°, vorzugsweise 30°, ausgeführt ist. Aufgrund der höheren Elastizität an der Stelle der kegelförmigen Freistellung ergibt sich eine noch bessere Anschmiegung des hohlzylindrischen Ansatzes an die Dichtfläche der zweiten Leitung.

Um zu verhindern, dass sich zwischen den miteinander zusammenwirkenden Dichtflächen ein Flüssigkeitspolster bildet, welcher eine Leckstelle ausbilden könnte, ist die Ausbildung mit Vorteil derart weitergebildet, dass die Dichtfläche des Anschlussstücks wenigstens eine Ringnut trägt. Bei einer Mehrzahl von Ringnuten an der Dichtfläche des Anschlussstücks kann bevorzugt weiters eine axiale Nut vorgesehen sein, welche die Mehrzahl von Ringnuten verbindet.

Gewünschtenfalls kann zwischen den miteinander zusammenwirkenden Dichtflächen des Anschlussstücks und der zweiten Leitung eine Ringdichtung angeordnet werden, wobei sich eine Ausbildung ergibt, bei welcher der hohlzylindrische Ansatz an seiner Außenfläche einen zylindrischen Absatz aufweist und in dem zwischen der Dichtfläche der zweiten Leitung und dem Absatz ausgebildeten Ringraum eine Ringdichtung angeordnet ist. Dabei wird durch die Auswirkung des in der Leitung herrschenden Innendruckes die Ringdichtung gegen die Schulter des zylindrischen Absatzes gepresst und verformt sich dabei derart, dass sie auch eine hohe Anpresskraft an die einander gegenüberliegenden Dichtflächen des Anschlussstücks und der zweiten Leitung ausübt, womit ein hervorragender Dichteffekt erzielt wird. Bevorzugt besteht die Ringdichtung hierbei aus Kunststoff, insbesondere Polytetrafluoräthylen (PTFE) und liegt auf einem metallischen Stützring auf. Die Ringdichtung kann einen kreisrunden, ovalen, rautenförmigen oder trapezförmigen Querschnitt aufweisen, wobei eine verbesserte Anpressung der Ringdichtung an die Dichtflächen erreicht wird, wenn eine Ringdichtung mit trapezförmigem Querschnitt verwendet wird, die an ihrer dem Innenraum der zweiten Leitung zugewandten Oberfläche eine ringförmige Ausnehmung aufweist.

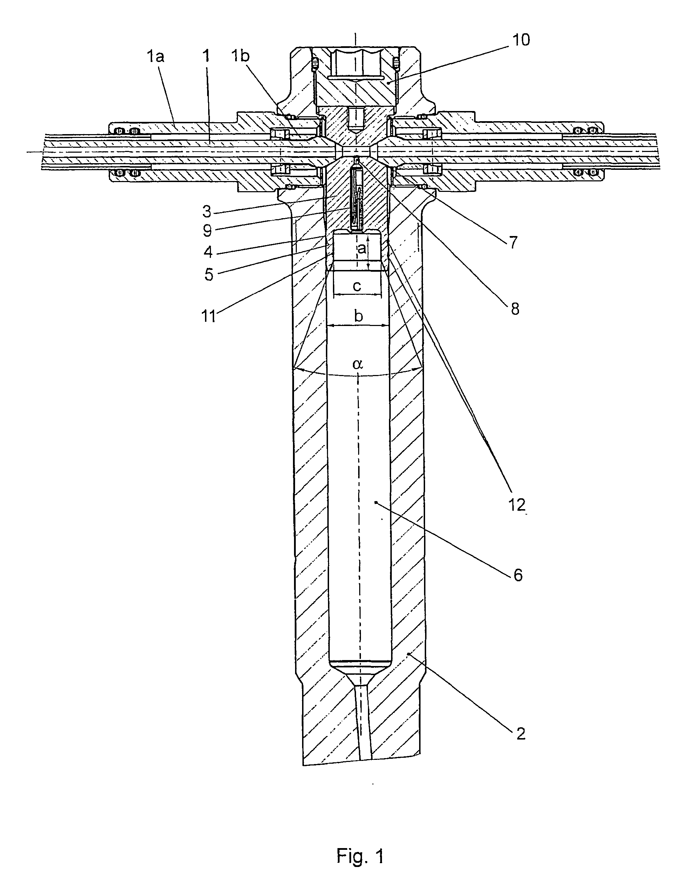

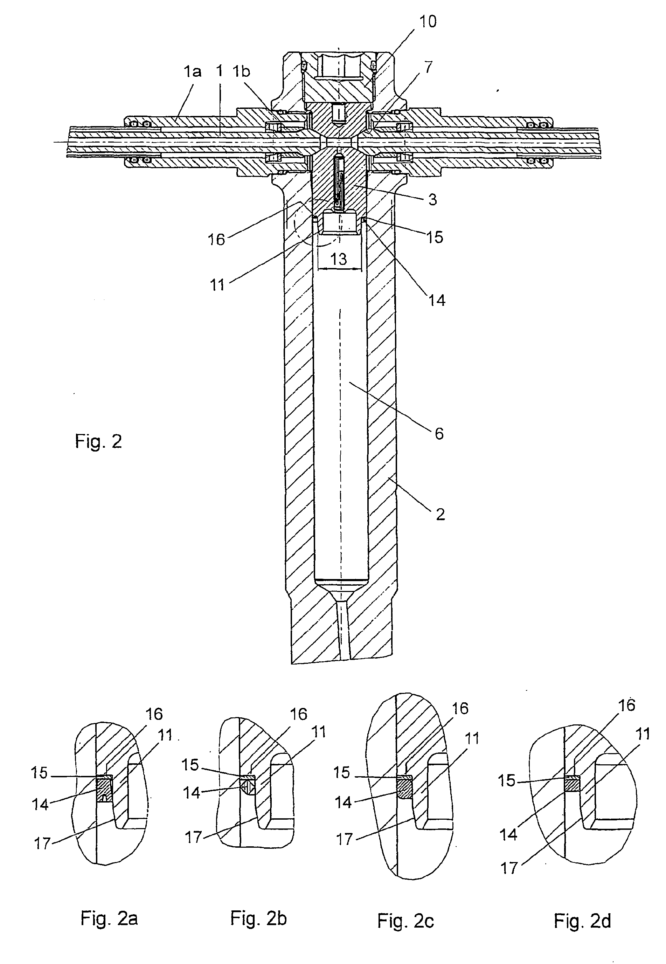

Die Erfindung wird nachfolgend anhand zweier in der Zeichnung schematisch dargestellter Ausführungsbeispiele näher erläutert. In dieser zeigt Fig. 1 eine erste Ausbildung der Leitungsverbindung und Fig. 2 eine zweite Ausbildung der erfindungsgemäßen Leitungsverbindung.

In Fig. 1 ist eine erste Leitung 1 mit einer zweiten Leitung 2 verbunden, wobei die erste Leitung 1 ein ins Innere der zweiten Leitung 2 ragendes Anschlussstück 3 aufweist. Das Anschlussstück 3 und die zweite Leitung 2 weisen miteinander zusammenwirkende zylindrische Dichtflächen 4 und 5 auf. Die zweite Leitung 2 ist als Injektorkörper eines Injektors eines Commonraileinspritzsystems für einen Dieselmotor ausgebildet. Im Injektorkörper 2 ist ein Speicherraum 6 angeordnet, in welchem sich Kraftstoff unter hohem Druck von beispielsweise 2000 bar befindet. Die Zuführung des von einer Hochdruckpumpe gelieferten Kraftstoffes erfolgt über die Leitungen 1, welche als Hochdruckleitungen ausgebildet sind und über Anschlussstücke 1b und über Schraubanschlüsse 1a in die Dichtkegel 7 des Anschlussstücks 3 gepresst sind. Über eine Längsbohrung 8 und einen Stabfilter 9 gelangt der Kraftstoff in den Speicherraum 6, aus dem er von einem nicht dargestellten magnetventilgesteuerten Einspritzventil in den Brennraum des Motors eingespritzt werden kann. Das Anschlussstück 3 wird durch eine Verschlussschraube 10 in seiner Position im Injektorkörper 2 gehalten.

Das zylindrische Anschlussstück 3 ragt weit in den als zylindrische Bohrung ausgeführten Speicherraum 6 und weist an seinem Ende einen hohlzylindrischen Ansatz 11 auf, dessen Länge a etwa 1/3 bis 2/3 des Durchmessers b des Speicherraumes 6 beträgt. Am Umfang des Anschlussstückes 3 sind eine oder mehrere Ringnuten 12 angeordnet, die über Längsnuten miteinander verbunden sind und eventuell auftretenden Leckkraftstoff über einen nicht dargestellten Anschluss drucklos nach außen ableiten.

Der Durchmesser des Anschlussstückes 3 ist geringfügig kleiner, gleich oder geringfügig größer als der Innendurchmesser des Speicherraumes 6. Dies ermöglicht eine einfache Montage und Positionierung. Für den Fall eines geringfügig größeren Durchmessers des Anschlussstückes 3 im Vergleich zum Durchmesser des Speicherraumes 6 erfolgt die axialkraftfreie Montage durch Kühlen des Anschlussstückes 6 und/oder Erwärmen des Injektorkörpers 2. Im Betrieb bewirkt der im Speicherraum 6 herrschende hohe Kraftstoffdruck auf Grund des elastischen Verhaltens der Werkstoffe des Injektorkörpers 2 und des Anschlussstückes 3 eine Durchmesservergrößerung beider Dichtpartner im Bereich der zylindrischen Dichtflächen 4,5. Diese Durchmesservergrößerung verursacht wegen dessen stärkerer elastischer Verformung auf Grund dessen geringerer Wandstärke ein Anschmiegen des hohlzylindrischen Ansatzes 11 des Anschlussstückes 3 an die Innenwand des Injektorkörpers 2. Die dabei auftretende Anpresskraft ist direkt abhängig vom vorliegenden Kraftstoffdruck. Die nach außen drucklos entlasteten Ringnuten 12 sorgen dafür, dass sich in der Dichtfläche kein Kraftstoffpolster bilden kann, welcher die Dichtheit der Anordnung gefährden könnte.

Die Bearbeitung der Dichtflächen 4,5 von Speicherraum 6 und hohlzylindrischem Ansatz 11 am Anschlussstück 3 erfolgt vorzugsweise derart, dass Bearbeitungsriefen radial und nicht axial verlaufen. Damit wird dem Auftreten von Leckwegen wirksam vorgebeugt.

An dem dem Speicherraum 6 zugewandten Ende des hohlzylindrischen Ansatzes 11 kann weiters eine kegelförmige Freistellung mit dem Kegelwinkel α vorgesehen sein, welche die Anpressung auf Grund der höheren Elastizität an dieser Stelle noch erhöht.

Bei der erfindungsgemäßen Anordnung muss von der Verschlussschraube 10 lediglich eine Axialkraft aufgebracht werden, die geringfügig über jener Kraft liegt, die sich als Produkt aus der Querschnittsfläche des Speicherraums 6 und dem Kraftstoffdruck ergibt.

Fig. 2 zeigt ebenfalls einen Längsschnitt durch einen Injektor eines Common Rail Einspritzsystems für einen Dieselmotor. Das Anschlussstück 3 weist an seinem speicherraumseitigen Ende einen zylindrischen Absatz 13 auf. Über diesen Absatz 13 ist ein ringförmiges Kunststoffelement 14 geschoben, das über einen metallischen Stützring 15 an der Schulter 16 anliegt. Durch die Auswirkung des im Speicherraum 6 auftretenden Kraftstoffdruckes wird das Kunststoffelement 14 gegen den Stützring 15 und die Schulter 16 gepresst. Es verformt sich dabei derart, dass es auch eine hohe Anpresskraft an die Innenwand des Speicherraums 6 und an den Absatz 13 des Anschlussstückes 3 ausübt. Damit wird ein hervorragender Dichteffekt erzielt.

Die Querschnittsform des ringförmigen Kunststoffelements 14 kann quadratisch oder rechteckig sein. Vorzugsweise kann auch ein runder, ovaler, rautenförmiger oder trapezförmiger Querschnitt Anwendung finden wie teilweise in den Fig. 2a, 2b, 2c und 2d dargestellt. Eine Ausnehmung im Trapezquerschnitt des Kunststoffelementes 14 gemäß Fig. 2a bewirkt eine weitere Verbesserung der Anpressung an die Seitenwände. Die Montage des Stützrings und des ringförmigen Kunststoffelements kann durch einen kegelförmigen Ansatz 17 unterstützt werden. Als Werkstoff für das Kunststoffelement 14 eignet sich besonders Polytetrafluoräthylen (PTFE).

Die dargestellten Anordnungen sind nicht auf Bauteile von Common Rail Systemen beschränkt, sondern allgemein für Anschlüsse von unter hohem Flüssigkeitsdruck stehenden Behältern, Rohren und Armaturen wirksam anwendbar.

## Patentansprüche

1. Verbindung von Leitungen für Hochdruckmedien, bei welcher eine erste Leitung (1) ein in das Innere einer zweiten Leitung (2) eingeschobenes Anschlussstück (3) aufweiset, wobei das Anschlussstück (3) und die Innenwand der zweiten Leitung (2) entweder unmittelbar oder unter Zwischenschaltung einer Dichtung (14) miteinander zusammenwirkende zylindrische Dichtflächen (4,5) tragen, **dadurch gekennzeichnet, dass** das Anschlussstück (3) im Bereich wenigstens eines Teils seiner Dichtfläche (4) mit verringerter Wandstärke ausgebildet ist, welche weniger als 50 % der Wandstärke der zweiten Leitung (2) im Bereich ihrer Dichtfläche (5) beträgt.

2. Verbindung nach Anspruch 1, **dadurch gekennzeichnet, dass** die Wandstärke des Anschlussstückes (3) im Bereich wenigstens eines Teils seiner Dichtfläche (4) weniger als 40%, bevorzugt weniger als 30%, besonders bevorzugt weniger als 20% der Wandstärke der zweiten Leitung (2) im Bereich ihrer Dichtfläche (5) beträgt.

3. Verbindung nach Anspruch 1 oder 2, **dadurch gekennzeichnet, dass** die Wandstärke des Anschlussstücke (3) im Bereich wenigstens eines Teils seiner Dichtfläche (4) weniger als 15 %, bevorzugt weniger als 10%, besonders bevorzugt weniger als 5% der Wandstärke der zweiten Leitung (2) im Bereich ihrer Dichtfläche (5) beiträgt.

4. Verbindung nach Anspruch 1, 2 oder 3, **dadurch gekennzeichnet, dass** die Dichtfläche (4) des Anschlussstücks (3) an einem hohlzylindrischen Ansatz (11) des Anschlussstücks (3) ausgebildet ist.

5. Verbindung nach Anspruch 4, **dadurch gekennzeichnet, dass** der hohlzylindrische Ansatz (11) einen Innendurchmesser (c) von 70 % bis 95%, vorzugsweise 85 % bis 90 %, des Innendurchmessers (b) der zweiten Leitung (2) aufweist.

6. Verbindung nach Anspruch 4 oder 5, **dadurch gekennzeichnet, dass** die Innenwand des hohlzylindrischen Ansatzes (11) an dessen freien Ende eine kegelförmige Freistellung aufweist.

7. Verbindung nach Anspruch 6, **dadurch gekennzeichnet, dass** die kegelförmige Freistellung mit einem Kegelwinkel (α) von 10° bis 60°, vorzugsweise 30°, ausgeführt list.

8. Verbindung nach einem der Ansprüche 1 bis 7, **dadurch gekennzeichnet, dass** die Dichtfläche (4) des Anschlussstücks (3) wenigstens eine Ringnut (12) trägt.

9. Verbindung nach einem der Ansprüche 1 bis 8, **dadurch gekennzeichnet, dass** die Dichtfläche (4) des Anschlussstücks (3) eine Mehrzahl von Ringnuten (12) trägt, welche durch wenigstens eine axiale Nut verbunden sind.

10. Verbindung nach einem der Ansprüche 4 bis 9, **dadurch gekennzeichnet, dass** sich der hohlzylindrischen Ansatz (11) über eine axiale Länge (a) von mindestens 1/3, vorzugsweise 1/3 bis 2/3, des Innendurchmessers (b) der zweiten Leitung (2) ersteckt.

11. Verbindung nach einem der Ansprüche 4 bis 10, **dadurch gekennzeichnet, dass** der hohlzylindrische Ansatz (11) an seiner Außenfläche einen zylindrischen Absatz (13) aufweist und in dem zwischen der Dichtfläche (5) der zweiten Leitung (2) und dem Absatz (13) ausgebildeten Ringraum eine Ringdichtung (14) angeordnet ist.

12. Verbindung nach Anspruch 11, **dadurch gekennzeichnet, dass** die Ringdichtung (14) aus Kunststoff,' insbesondere Polytetrafluoräthylen (PTFE), besteht und auf einem metallischen Stützring (15) aufliegt.

13. Verbindung nach Anspruch 11 oder 12, **dadurch gekennzeichnet, dass** die Ringdichtung (14) einen kreisrunden, ovalen, rautenförmigen oder trapezförmigen Querschnitt aufweist.

14. Verbindung nach Anspruch 13, **dadurch gekennzeichnet, dass** die mit trapezförmigem Querschnitt ausgebildete Ringdichtung (14) an ihrer dem Innenraum der zweiten Leitung (2) zugewandten Oberfläche eine ringförmige Ausnehmung aufweist.

15. Verbindung nach einem der Ansprüche 1 bis 14, **dadurch gekennzeichnet, dass** die erste Leitung (1) als eine Hochdruckzuführungsleitung für Kraftstoff oder als ein Anschlussstück (13) für eine Hochdruckzuführungsleitung und die zweite Leitung (2) als Speicherraum eines Injektors eines Kraftstoffeinspritzsystems für Verbrennungsmotoren, insbesondere Dieselmotoren, ausgebildet ist.

## Claims

1. A connection for high-pressure medium conduits, in which a first conduit (1) includes a connection piece (3) inserted in the interior of a second conduit (2), wherein the connection piece (3) and the inner wall of the second conduit (2) carry cylindrical sealing surfaces (4) cooperating with each other either directly or via an interposed seal (14), **characterized in that** the connection piece (3), in the region of at least a portion of its sealing surface (4), is formed with a reduced wall thickness amounting to less than 50% of the wall thickness of the second conduit (2) in the region of its sealing surface (5).

2. A connection according to claim 1, **characterized in that** the wall thickness of the connection piece (3) in the region of at least a portion of its sealing surface (4) amounts to less than 40%, preferably less than 30%, in a particularly preferred manner less than 20%, of the wall thickness of the second conduit (2) in the region of its sealing surface (5).

3. A connection according to claim 1 or 2, **characterized in that** the wall thickness of the connection piece (3) in the region of at least a portion of its sealing surface (4) amounts to less than 15%, preferably less than 10%, in a particularly preferred manner less than 5%, of the wall thickness of the second conduit (2) in the region of its sealing surface (5).

4. A connection according to claim 1, 2 or 3, **characterized in that** the sealing surface (4) of the connection piece (3) is formed on a hollow-cylindrical extension (11) of the connection piece (3).

5. A connection according to claim 4, **characterized in that** the hollow-cylindrical extension (11) has an inner diameter (c) amounting to 70% to 95%, preferably 85% to 90%, of the inner diameter (b) of the second conduit (2).

6. A connection according to claim 4 or 5, **characterized in that** the inner wall of the hollow-cylindrical extension (11) comprises a conical clearance on the free end thereof.

7. A connection according to claim 6, **characterized in that** the conical clearance is formed with a conical angle (□) of 10° to 60°, preferably 30°.

8. A connection according to any one of claims 1 to 7, **characterized in that** the sealing surface (4) of the connection piece (3) carries at least one annular groove (12).

9. A connection according to any one of claims 1 to 8, **characterized in that** the sealing surface (4) of the connection piece (3) carries a plurality of annular grooves (12), which are interconnected by at least one axial groove.

10. A connection according to any one of claims 1 to 9, **characterized in that** the hollow-cylindrical extension (11) extends over an axial length (a) of at least 1/3, preferably 1/3 to 2/3, of the inner diameter (b) of the second conduit (2).

11. A connection according to any one of claims 1 to 10, **characterized in that** the hollow-cylindrical extension (11) comprises a cylindrical step (13) on its outer face, and an annular seal (14) is arranged in the annular space formed between the sealing surface (5) of the second conduit (2) and the step (13).

12. A connection according to claim 11, **characterized in that** the annular seal (14) is made of a synthetic material, in particular polytetrafluoroethylene (PTFE), and rests on a metallic support ring (15).

13. A connection according to claim 11 or 12, **characterized in that** the annular seal (14) has a circular, oval, lozenge or trapezoidal cross section.

14. A connection according to claim 13, **characterized in that** the annular seal (14) formed with a trapezoidal cross section has an annular recess on its surface facing the interior of the second conduit (2).

15. A connection according to any one of claims 1 to 14, **characterized in that** the first conduit (1) is designed as a high-pressure supply conduit for fuel, or as a connection piece (13) for a high-pressure supply conduit, and the second conduit (2) is designed as the storage volume of an injector of a fuel injection system for an internal combustion engine, in particular diesel engine.

## Revendications

1. Raccord de conduites pour milieux sous haute pression, dans lequel une première conduite (1) comporte une pièce de raccordement (3) introduite à l'intérieur d'une seconde conduite (2), la pièce de raccordement (3) et la paroi intérieure de la seconde conduite (2) portant des surfaces d'étanchéité (4, 5) cylindriques coopérant entre elles soit directement, soit par interposition d'une garniture d'étanchéité (14), **caractérisé en ce que** la pièce de raccordement (3) présente une épaisseur de paroi réduite dans la zone d'au moins une partie de sa surface d'étanchéité (4), laquelle épaisseur est inférieure à 50 % de l'épaisseur de la paroi de la seconde conduite (2) dans la zone de sa surface d'étanchéité (5).

2. Raccord selon la revendication 1, **caractérisé en ce que** dans la zone d'au moins une partie de sa surface d'étanchéité (4), l'épaisseur de la paroi de la pièce de raccordement (3) est inférieure à 40 %, de préférence inférieure à 30 %, de manière particulièrement préférée inférieure à 20 % de l'épaisseur de la paroi de la seconde conduite (2) dans la zone de sa surface d'étanchéité (5).

3. Raccord selon l'une quelconque des revendications 1 ou 2, **caractérisé en ce que** dans la zone d'au moins une partie de sa surface d'étanchéité (4), l'épaisseur de la paroi de la pièce de raccordement (3) est inférieure à 15 %, de préférence inférieure à 10 %, de manière particulièrement préférée inférieure à 5 % de l'épaisseur de la paroi de la seconde conduite (2) dans la zone de sa surface d'étanchéité (5).

4. Raccord selon l'une quelconque des revendications 1, 2 ou 3, **caractérisé en ce que** la surface d'étanchéité (4) de la pièce de raccordement (3) est réalisée sur un appendice (1) cylindrique creux de la pièce de raccordement (3).

5. Raccord selon la revendication 4, **caractérisé en ce que** l'appendice (11) cylindrique creux présente un diamètre intérieur (c) de 70 % à 95 %, de préférence de 85 % à 90 %, du diamètre intérieur (b) de la seconde conduite (2).

6. Raccord selon l'une quelconque des revendications 4 ou 5, **caractérisé en ce que** la paroi intérieure de l'appendice (11) cylindrique creux présente un dégagement de forme conique à son extrémité libre.

7. Raccord selon la revendication 6, **caractérisé en ce que** le dégagement de forme conique est réalisé avec un angle de cône (α) compris entre 10° et 60°, de préférence égal à 30°.

8. Raccord selon l'une quelconque des revendications 1 à 7, **caractérisé en ce que** la surface d'étanchéité (4) de la pièce de raccordement (3) porte au moins une rainure annulaire (12).

9. Raccord selon l'une quelconque des revendications 1 à 8, **caractérisé en ce que** la surface d'étanchéité (4) de la pièce de raccordement (3) porte une pluralité de rainures annulaires (12) qui sont reliées par au moins une rainure axiale.

10. Raccord selon l'une quelconque des revendications 4 à 9, **caractérisé en ce que** l'appendice (11) cylindrique creux s'étend sur une longueur axiale (a) d'au moins 1/3, de préférence de 1/3 à 2/3, du diamètre intérieur (b) de la seconde conduite (2).

11. Raccord selon l'une quelconque des revendications 4 à 10, **caractérisé en ce que** l'appendice (11) cylindrique creux présente, sur sa surface extérieure, un palier (13) cylindrique et une bague d'étanchéité (14) est disposée dans l'espace annulaire réalisé entre la surface d'étanchéité (5) de la seconde conduite (3) et le palier (13) .

12. Raccord selon la revendication 11, **caractérisé en ce que** la bague d'étanchéité (14) est en matière plastique, en particulier en polytétrafluoréthylène (PTFE) et repose sur une bague d'appui (15) métallique.

13. Raccord selon l'une quelconque des revendications 11 ou 12, **caractérisé en ce que** la bague d'étanchéité (14) présente une section ovale, en forme de losange ou trapézoïdale.

14. Raccord selon la revendication 13, **caractérisé en ce que** la bague d'étanchéité (14), avec section trapézoïdale, présente un évidement de forme annulaire sur sa surface tournée vers le volume intérieur de la seconde conduite (2).

15. Raccord selon l'une quelconque des revendications 1 à 14, **caractérisé en ce que** la première conduite (1) est réalisée sous la forme d'une conduite d'amenée sous haute pression pour carburant ou sous la forme d'une pièce de raccordement (13) pour une conduite d'amenée sous haute pression et la seconde conduite (2) est réalisée sous la forme d'un volume d'accumulation d'un injecteur d'un système d'injection de carburant pour moteurs à combustion interne, en particulier pour moteurs diesel.
